# FASCICULE DE BREVET EUROPEEN

(11) **EP 1 651 714 B1**
(45) Date de publication et mention de la délivrance du brevet: **06.01.2010**
(21) Numéro de dépôt: 04786252.9
(22) Date de dépôt: 03.08.2004
(51) Int. Cl.: C08K 3/08, C09D 177/02, C09D 177/06, C08L 77/00, C08L 77/02, C08L 77/06, C08K 3/04

(54) **COMPOSITION ELECTROSTATIQUE A BASE DE MATRICE POLYAMIDE**
ELEKTROSTATISCHE ZUSAMMENSETZUNG VON POLYAMIDMATRIXEN
ELECTROSTATIC COMPOSITION BASED ON A POLYAMIDE MATRIX

(30) Priorité: 08.08.2003 FR 0309782
(43) Date de publication de la demande: 03.05.2006
(73) Titulaire: Rhodia Engineering Plastics SA, 69190 Saint-Fons (FR)
(72) Inventeur: PEDUTO, Nicolangelo, I-20031 Cesano Maderno (MI) (IT); BRADLEY, Gérard, I-21047 Saronno (VA) (IT)
(74) Mandataire: Valentino, Cédric
(86) Numéro de dépôt international: PCT/FR2004/002077
(87) Numéro de publication internationale: WO 2005/017038

(56) Documents cités:
- WO-A-01/36536
- US-A- 6 150 446
- US-B1- 6 267 148
- US-B1- 6 344 513
- US-B1- 6 506 830
- DATABASE WPI Section Ch, Week 199921 Derwent Publications Ltd., London, GB; Class A23, AN 1999-248579 XP002274719 & JP 11 071515 A (KANEBO GOSEN KK) 16 mars 1999 (1999-03-16)
- DATABASE WPI Section Ch, Week 200137 Derwent Publications Ltd., London, GB; Class A23, AN 2001-347421 XP002274720 & JP 2001 002915 A (OTSUKA KAGAKU YAKUHIN KK) 9 janvier 2001 (2001-01-09)

## Description

La présente invention concerne une composition à base de matrice polyamide comprenant des charges électriquement conductrices et des agents antistatiques. La mise en forme de cette composition permet d'obtenir des articles plastiques tels que par exemple des pièces de carrosserie dans le domaine de l'automobile, ayant une bonne capacité à être peints par un procédé de déposition électrostatique de la peinture.

### ART ANTERIEUR

Dans de nombreuses industries, il existe une demande importante de pièces en matériaux polyamide. En effet, ces pièces sont légères et peuvent être conçues et dessinées plus facilement que des pièces en acier ou en aluminium, notamment dans le domaine de l'industrie automobile.

Toutefois, les pièces plastiques posent des problèmes lorsque l'on souhaite les peindre.

Ainsi, par exemple, dans le domaine de l'automobile, il existe notamment trois méthodes principales de peinture par procédé électrostatique, c'est à dire par mouvement des particules sous l'influence d'un courant électrique. Le premier, appelé « procédé inline », se réfère à un procédé selon lequel la pièce en matériau plastique est assemblée sur le véhicule après que celui-ci ait subi les étapes de dégraissage et de galvanisation suivies par une étape de séchage. La pièce en matériau plastique et le véhicule sont ensuite peints et séchés par chauffage. Le second, appelé procédé « online », se réfère à un procédé selon lequel la pièce en matériau plastique est assemblée sur le véhicule au début du procédé mentionné précédemment. Les pièces plastiques subissent donc les étapes de dégraissage, de galvanisation et de séchage, à des températures pouvant dépasser les 200°C. Par conséquent pour ce type de procédé, il est nécessaire que les pièces en matériau plastique puissent résister à des températures plus importantes. Dans un troisième procédé, appelé procédé « offline », la pièce en matériau plastique est d'abord peinte pour être ensuite assemblée sur le véhicule. Lorsqu'on utilise des procédés de peinture par déposition électrostatiques on obtient une mauvaise adhésion de la peinture aux pièces plastiques classiques. En effet, la peinture s'arrache facilement et n'adhère pas ou peu aux pièces plastiques.

Pour rendre les pièces plastiques aptes à être peintes par un procédé de déposition électrostatique de la peinture, il est connu de rajouter des charges conductrices dans la matrice thermoplastique. Toutefois, l'incorporation de ces charges affecte négativement certaines propriétés des matériaux plastiques, telles que les propriétés mécaniques. De plus, l'incorporation de charges conductrices augmente significativement la viscosité à l'état fondu des matrices thermoplastiques, les rendants impropres à l'utilisation pour certains procédés de mise en forme de ces matrices.

Ainsi, il existe un besoin de fabriquer et utiliser des pièces plastiques présentant des propriétés mécaniques élevées, telle qu'une bonne résistance aux chocs, et une bonne capacité à être peintes par un procédé de déposition électrostatique de la peinture.

### INVENTION

La demanderesse a mis en évidence une composition à base de matrice polyamide comprenant des charges électriquement conductrices et des agents antistatiques. Cette composition polyamide permet la mise en forme d'articles présentant une bonne balance de propriétés mécaniques, thermiques et de capacité à être peints, notamment par déposition de peinture par un procédé électrostatique.

Les pièces plastiques selon l'invention présentent également un coefficient d'expansion thermique linéaire (CTLE) convenable notamment pour le domaine de l'industrie automobile. Les pièces plastiques selon l'invention possèdent de plus une bonne résistance thermique, un bon aspect de surface et une bonne propension au moulage.

Ces pièces plastiques conviennent ainsi très bien aux procédés de peinture par déposition électrostatique, tels que les procédés « inline », « online » et « offline » notamment utilisés dans l'industrie automobile.

Il apparaît de plus que la composition à base de matrice polyamide selon l'invention est significativement moins visqueuse à l'état fondu, en comparaison avec une composition polyamide comprenant uniquement des charges conductrices, ce qui est particulièrement intéressant pour certains procédés de fabrication de pièces, tel que le moulage par injection.

### EXPOSE DETAILLE DE L'INVENTION

La présente invention a pour premier objet un procédé d'application de peinture par déposition électrostatique sur un article mis en forme à partir d'une composition comprenant une matrice polyamide, **caractérisée en ce qu**'elle comprend :
- au moins 2 % en poids de charges électriquement conductrices ; et
- au moins 1 % en poids d'agents antistatiques de type polyétheramide représenté par la formule (I) : 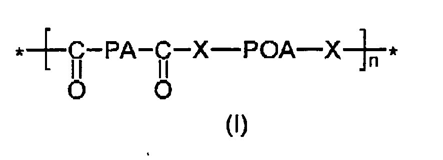 dans laquelle,
   - n est un nombre entier compris entre 5 et 50 ;
   - X représente un atome d'oxygène ou un groupement NH ;
   - POA représente un bloc polyoxyde d'alkylène ;
   - PA représente un bloc polyamide dont le motif de répétition est représenté par l'une des formules (IIa) ou (IIb): 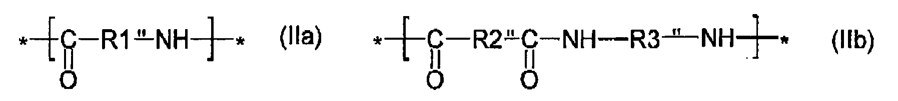 dans lesquelles : R¹, R², R³ sont des radicaux aromatiques ou aliphatiques comprenant 4 à 36 atomes de carbone ;
les pourcentages en poids étant exprimés par rapport au poids total de la composition.

Cette composition peut comprendre un ou plusieurs types de charges électriquement conductrices et un ou plusieurs type d'agents antistatiques. Préférentiellement, la composition selon l'invention est une composition dissipatrice électrostatique présentant une résistivité de surface comprise entre 10⁵ Ω et 10¹¹ Ω, selon la norme IEC 61340-4-1.

La composition selon la présente invention peut également présenter un temps de déchargement supérieur ou égal à 10 secondes, préférentiellement supérieur ou égal à 30 secondes, plus préférentiellement supérieur ou égal à 50 secondes, mesuré selon la norme IEC 61340-5-1. Le temps de déchargement peut par exemple être mesuré sur une plaque (par exemple ayant les dimensions suivantes: 200x150x3 mm) obtenue à partir de la composition selon l'invention sur laquelle on applique une charge de 1000 volts (V). Le temps de déchargement correspond au temps nécessaire pour que la tension électrique à la surface de la plaque passe de 1000 V à 100 V.

Les paramètres de résistivité de surface et de temps de déchargement de la composition de l'invention sont particulièrement bien adaptés pour l'obtention d'articles ayant une bonne capabilité à la peinture et un bon compromis de propriétés mécaniques.

La composition selon l'invention peut comprendre de 2 à 50% en poids de charges électriquement conductrices par rapport au poids total de la composition, préférentiellement de 2 à 30 % en poids, encore plus préférentiellement de 2 à 10 % en poids, particulièrement de 2 à 5 % en poids.

Les charges électriquement conductrices sont préférentiellement choisies dans le groupe comprenant : un noir de carbone, un métal, un graphite, un polymère conducteur, un verre et/ou une charge minérale enrobée par une couche de métal, et/ou leur mélange.

Le verre et/ou les charges minérales peuvent être enrobés par une couche de métal tel que du nickel, de l'aluminium, de l'argent, du fer, du chrome et/ou du titane, par exemple.

Les charges électriquement conductrices peuvent être sous la forme de sphère, comme par exemple sous forme de micro-sphère et/ou nano-sphère ; de tubes, comme par exemple sous forme de micro-tubes et/ou nano-tubes ; et/ou de fibres, comme par exemple sous forme de micro-fibres et/ou de nano-fibres. Ces fibres peuvent être coupées et/ou broyées.

Comme polymère conducteur, on peut utiliser par exemple la polyaniline, le polypyrrole, le polythiophène et/ou le polyacétylène.

Préférentiellement, la charge conductrice selon l'invention est du noir de carbone. Le noir de carbone conducteur est décrit notamment dans Carbon Black second Edition Revised and Expansed, Science and Technology édité par JB. Donnet, RC Bansal et MJ Wang, Marcel Dekker Inc, pages 271-275. D'une manière préférentielle, la composition selon l'invention comprend de 2 à 10 % en poids de noir de carbone, préférentiellement de 2 à 5 % en poids, particulièrement de 2 à 4 % en poids, en tant que charges électriquement conductrices, par rapport au poids total de la composition.

Les agents antistatiques utilisés selon la présente invention peuvent également être appelés agents électrostatiques dissipateurs.

Préférentiellement, la composition selon l'invention comprend de 1 à 30% en poids de d'agents antistatiques par rapport au poids total de la composition, encore plus préférentiellement de 5 à 20 % en poids.

Les agents antistatiques sont choisis parmi les polyétheramides.

On entend par polyétheramides, différents types de polymères comprenant un ou plusieurs blocs de polyamide et un ou plusieurs blocs de polyoxyde d'alkylène.

Le polyétheramide est un composé polymère bloc représenté par la formule (I) : 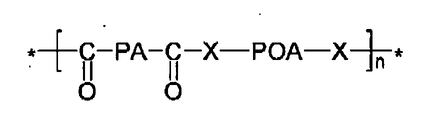 dans laquelle,
- n est un nombre entier compris entre 5 et 50 ;
- X représente un atome d'oxygène ou un groupement NH ;
- POA représente un bloc polyoxyde d'alkylène ;
- PA représente un bloc polyamide dont le motif de répétition est représenté par l'une des formules (IIa) ou (IIb) : 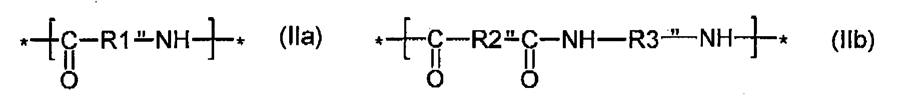 dans lesquelles : R¹, R², R³ sont des radicaux aromatiques ou aliphatiques comprenant 4 à 36 atomes de carbone.

Le copolymère bloc représenté par la formule (I) est un polyétherblocamide ou un polyétheresteramide. De tels composés sont notamment commercialisés par la société Atofina sous la dénomination de PEBAX® et la société Ciba sous la dénomination Irgastat. Ils comportent des blocs polyamide, et des blocs polyalkylène glycol. Le nombre de blocs de chaque nature est compris entre 3 et 50. Il est de préférence compris entre 10 et 15. Le nombre de blocs est représenté par le nombre entier n dans la formule (I).

Les blocs polyamides peuvent être représentés par l'une des formules (IIa) ou (IIb) représentées ci-dessus. Les blocs de formule (IIa) sont des polyamides du type de ceux obtenus par polymérisation à partir de lactames et/ou d'aminoacides. Les procédés de polymérisation de tels composés sont connus : on cite entre autre la polymérisation anionique, la polycondensation en fondu, par exemple dans un tube VK. Les blocs (IIb) sont du type de ceux obtenus par polycondensation de diacides carboxyliques sur des amines.

Préférentiellement, X représente un atome d'oxygène, la formule (I) étant ainsi la suivante :

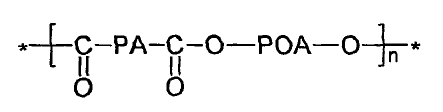

Selon le mode de réalisation où le bloc polyamide est représenté par la formule (IIa), le radical R¹ est avantageusement choisi parmi les radicaux suivants :
- le radical pentyle linéaire divalent, le bloc polyamide est alors un bloc polyamide 6 ;
- le radical décyle (10 atomes de carbone) divalent non ramifié, le bloc polyamide est alors un bloc polyamide 11 ;
- le radical undécyle (11 atomes de carbone) divalent non ramifié, le bloc polyamide est alors un bloc polyamide 12.

Selon le mode de réalisation où le bloc polyamide est représenté par la formule (IIb), les couples de radicaux R² et R³ sont avantageusement parmi les couples suivants :
- R² = radical butyle linéaire divalent, R³ =radical hexyle linéaire divalent, bloc polyamide 66 ;
- R² = radical butyle linéaire divalent, R³ = radical butyle linéaire divalent, bloc polyamide 4-6 ;
- R² = radical octyle linéaire divalent, R³ = radical hexyle linéaire divalent, bloc polyamide 6-10.

Le bloc polyoxyde d'alkylène peut être choisi parmi les blocs polyoxyde d'éthylène, polytriméthylène oxide, polytetraméthylène oxyde. Dans le cas où le bloc est à base de polyoxyde d'éthylène, il peut comporter aux extrémités du bloc des motifs propylène glycol. Les masses moléculaires moyennes de chacun des blocs sont indépendantes l'une de l'autre. On préfère toutefois qu'elles soient proches l'une de l'autre. La masse moléculaire moyenne des blocs POA est de préférence comprise entre 1000 et 3000 g/mol. La masse moléculaire moyenne des blocs PA est avantageusement comprise entre 1000 et 3000 g/mol.

Le composé de formule (I) peut être obtenu par réaction catalysée entre des chaînes macromoléculaires polyamides dont les fonctions terminales sont des fonctions acides carboxyliques, et des chaînes polyéther diols, c'est-à-dire des chaînes macromoléculaires polyoxyde d'alkylène dont les fonctions terminales sont des fonctions alcool. Il s'agit par exemple de chaînes polyéthylène glycol à terminaisons alcools.

La réaction entre les fonctions terminales des blocs peut être catalysée par des tétraalkylorthotitanates ou de l'acétate de zirconyle.

Selon un mode particulier de réalisation de l'invention, les composés modificateurs de formule (I) ont une température de fusion supérieure à 150°C, de préférence comprise entre 150 et 250°C.

La matrice polyamide selon l'invention est généralement composée d'au moins un (co)polyamide choisi dans le groupe comprenant : le (co)polyamide 6 ; 4 ; 11 ; 12, 4.6 ; 6.6 ; 6.9 ; 6.10 ; 6.12 ; 6.18 ; 6.36. ; 6(T) ; 9(T) ; 6(I) ; MXD6 ; leurs copolymères et/ou mélanges.

On peut citer, par exemple, les polyamides semi-cristallins ou amorphes, tels que les polyamides aliphatiques, polyamides semi-aromatiques et plus généralement, les polyamides linéaires obtenus par polycondensation entre un diacide saturé aliphatique ou aromatique, et une diamine primaire saturée aromatique ou aliphatique, les polyamides obtenus par condensation d'un lactame, d'un aminoacide ou les polyamides linéaires obtenus par condensation d'un mélange de ces différents monomères. Ces copolyamides peuvent être, par exemple, le polyadipamide d'hexaméthylène, les polyphtalamides obtenus à partir d'acide téréphtalique et/ou isophtalique, les copolyamides obtenus à partir de caprolactame, et d'un ou plusieurs monomères généralement utilisés pour la fabrication des polyamides, tel que l'acide adipique, l'acide téréphtalique, et/ou l'hexaméthylène diamine. Le polyamide 6(T) est un polyamide obtenu par polycondensation d'acide téréphtalique et d'hexaméthylène diamine. Le polyamide 9(T) est un polyamide obtenu par polycondensation d'acide téréphtalique et d'une diamine comprenant 9 atomes de carbone. Le polyamide 6(I) est un polyamide obtenu par polycondensation d'acide isophtalique et d'hexaméthylène diamine. Le polyamide MXD6 est un polyamide obtenu par polycondensation d'acide adipique et de métaxylylène diamine.

La composition peut comprendre un ou plusieurs (co)polyamides obtenus en mélange ou en copolymère, par exemple.

La matrice polyamide peut notamment être un polyamide comprenant des chaînes macromoléculaires étoiles ou H, et le cas échéant des chaînes macromoléculaires linéaires. Les polymères comprenant de telles chaînes macromoléculaires étoiles ou H sont par exemple décrits dans les documents FR2743077, FR2779730, US5959069, EP0632703, EP0682057 et EP0832149. Selon une autre variante particulière de l'invention, la matrice polyamide de l'invention peut être un polymère de type arbre statistique, de préférence un copolyamide présentant une structure arbre statistique. Ces copolyamides de structure arbre statistique ainsi que leur procédé d'obtention sont notamment décrits dans le document WO99/03909. La matrice thermoplastique de l'invention peut également être une composition comprenant un polymère thermoplastique linéaire et un polymère thermoplastique étoile, H et/ou arbre tels que décrits ci-dessus. La matrice thermoplastique de l'invention peut également comprendre un copolyamide hyperbranché du type de ceux décrits dans le document WO00/68298. La matrice thermoplastique de l'invention peut également comprendre toute combinaison de polymère thermoplastique linéaire, étoile, H, arbre, copolyamide hyperbranché tel que décrit ci-dessus.

Selon une caractéristique particulière de l'invention, la matrice polyamide de la composition est constituée par un mélange d'un polyamide avec un ou plusieurs autres polymères, de préférence de type (co)polyamides. Un mélange de (co)polyamide avec au moins un polymère choisi dans le groupe comprenant : le polyphénylène éther (PPE), le poly(chlorure de vinyle) (PVC), le polymère acrylonitrile-butadiène-styrène (ABS), le polyéthylène (PE), le polypropylène (PP), le polyéthylène téréphthalate (PET) et/ou le polybutylène téréphthalate (PBT) est également envisageable.

La composition polyamide selon l'invention peut comprendre des charges de renfort et/ou de remplissage préférentiellement choisies dans le groupe comprenant les charges fibreuses, telles que les fibres de verre, les fibres métalliques, les fibres de carbone ; les charges minérales telles que les argiles, le kaolin, la wollastonite, le mica, le talc et les billes de verre ; des nanoparticules renforçantes finement dispersibles, telles que la montmorillonite ; ou en matière thermo-durcissable. Le taux d'incorporation de ces charges est conforme aux standards dans le domaine des matériaux composites. Il peut s'agir par exemple d'un taux de charge de 1 à 70 % en poids, préférentiellement de 10 et 60 % en poids, par rapport au poids total de la composition.

La composition polyamide selon l'invention peut également comprendre au moins un agent modificateur de la résistance aux chocs choisi, par exemple, dans le groupe comprenant : l'éthylène propylène (EP) éventuellement greffé avec de l'anhydride maléique, le terpolymère éthylène propylène diène (EPDM) éventuellement greffé avec de l'anhydride maléique, les copolymère élastomère tel que styrène maléique anhydride (SMA) par exemple, le polyéthylène à ultra basse densité (ULDPE), le polyéthylène linéaire à basse densité (LLDPE), les styrènes butadiènes (SBS et SBR), les styrènes éthylène butadiène styrène (SEBS), le polypropylène (PP), les élastomères acryliques (tel que les élastomères polyacryliques), les copolymère et terpolymères de l'éthylène avec des dérivés acryliques ou méthacryliques et/ou avec l'acétate de vinyle, les ionomères, le terpolymère acrylonitrile-butadiène-styrène (ABS) et le terpolymère acrylique-styrène-acrylonitrile (ASA). Les modificateurs la résistance aux chocs peuvent éventuellement comprendre des groupements greffés tels que de l'anhydre maléique par exemple. Les modificateurs la résistance aux chocs selon l'invention peuvent être également des combinaisons, mélanges, homopolymères, copolymères et/ou terpolymères des composés mentionnés ci-dessus. Les modificateurs la résistance aux chocs sont choisis par l'homme du métier pour leur compatibilité avec la matrice polyamide.

La composition polyamide selon l'invention peut en outre comprendre un ou plusieurs additifs habituellement utilisés par un homme du métier dans les compositions thermoplastique, notamment utilisées pour la fabrication d'articles moulés. Ainsi, on peut citer à titre d'exemple d'additifs les stabilisants thermiques, les ignifugeants, les agents de moulage tels que le calcium stéarate, les stabilisants U.V., les antioxydants, les lubrifiants, les réducteurs d'abrasion, les pigments, les colorants, les plastifiants, les promoteurs de marquage au laser, les cires ou des agents modifiant la résilience. A titre d'exemple, les antioxydants et stabilisants chaleur sont, par exemple, des halogénures d'alcalins, des halogénures de cuivre, les composés phénoliques stériquement encombrés, les phosphites organiques et les amines aromatiques.

La présente invention concerne aussi un procédé de préparation d'une composition polyamide telle que définie précédemment, dans lequel on mélange au moins 2 % en poids de charges électriquement conductrices et au moins 1 % en poids d'agents antistatiques, avec une matrice polyamide, éventuellement à l'état fondu.

Le mélange peut être effectué à l'état fondu par exemple dans une extrudeuse mono ou bivis, ou par mélange sans passer à l'état fondu, par exemple dans un mélangeur mécanique. Les composés peuvent être introduits simultanément ou successivement. Tous les moyens connus de l'homme du métier concernant l'introduction des différents composés d'une composition thermoplastique peuvent être utilisés. On utilise généralement un dispositif d'extrusion dans lequel la matière est chauffée, soumise à une force de cisaillement, et véhiculée. De tels dispositifs sont parfaitement connus de l'homme du métier.

La composition selon l'invention, lorsqu'elle est préparée à l'aide d'un dispositif d'extrusion peut être conditionnée sous forme de granulés.

Le mélange des charges électriquement conductrices et des agents antistatiques peut être effectué au préalable, par exemple, par mélange continu ou discontinu. Pour ce faire, on peut utiliser, par exemple, un mélangeur de Banbury.

On peut également ajouter à la matrice polyamide, un mélange concentré, préférentiellement à base de polyamide, comprenant les charges électriquement conductrices et/ou les agents antistatiques, préparé par exemple selon la méthode décrite précédemment. Ce mélange maître peut par exemple être effectué par pré-mélange des différents composés.

Ainsi, la présente invention concerne également un procédé de préparation d'une composition polyamide telle que décrite précédemment, dans lequel on mélange au moins une matrice polyamide avec :
- un mélange concentré à base de matrice thermoplastique comprenant au moins 20 % en poids de charge électriquement conductrices, et
- au moins 1 % en poids d'agents antistatiques.

Le mélange maître peut comprendre par exemple de 20 à 50 % en poids de charges électriquement conductrices, tel que le noir de carbone.

Ce mélange maître est à base d'une matrice thermoplastique, par exemple choisie dans le groupe comprenant: un (co)polyamide, un copolymère éthylène/acétate de vinyle (EVA), un éthylène/acide acrylique (EAA), un polyéthylène (PE), un polypropylène (PP), leurs copolymères et/ou mélanges.

Il est à noter que le mélange maître peut également comprendre des agents antistatiques selon l'invention.

De nombreuses méthodes de mélange des (co)polyamides de l'invention avec les charges de renforts et/ou de remplissage, agents modificateur de la résistance aux chocs et/ou additifs peuvent être envisagées. Ceux-ci peuvent être par exemple introduit en mélange avec le (co)polyamide à l'état fondu avant la fabrication de granulés. Certaines de ces charges, agents et/ou additifs peuvent également être ajoutés au cours de la polymérisation du (co)polyamide.

La présente invention concerne aussi un procédé de fabrication d'un article par mise en forme d'une composition selon l'invention par un procédé choisi dans le groupe comprenant un procédé d'extrusion, tel que l'extrusion de feuilles et de films, de moulage, tel que le moulage par compression, et d'injection, tel que le moulage par injection.

Les articles selon l'invention peuvent être par exemple des pièces automobiles en particulier des pièces de carrosserie, des tubes destinés au transport de fluides ou de gaz, des réservoirs, des revêtements, des films et/ou des couvertures plastiques de réservoirs.

La présente invention concerne également un procédé d'application de peinture par déposition électrostatique sur un article, **caractérisé en ce que** l'on utilise dans ce procédé un article de l'invention tel que décrit précédemment. L'application de la peinture sur l'article peut être effectuée, par exemple, par vaporisation ou immersion. Généralement, un procédé d'application de peinture par déposition électrostatique sur un article comprend au moins les étapes suivantes : Traitement en cataphorèse de l'article à des températures comprises entre 150 et 250°C, Application d'un apprêt (primer) par vaporisation électrostatique, Application de la peinture par vaporisation électrostatique. Chaque étape de vaporisation peut être suivie d'étape(s) de chauffage à des températures comprises entre 100 et 200°C, et d'étape(s) de refroidissement.

La présente invention concerne aussi un article peint par un procédé d'application de peinture par déposition électrostatique.

D'autres détails ou avantages de l'invention apparaîtront plus clairement au vu des exemples donnés ci-dessous uniquement à titre indicatif.

### PARTIE EXPERIMENTALE

### Matériaux utilisés:

- PA 66 : polyamide 66 de viscosité relative 2,7 (selon la norme ISO 307 en utilisant comme solvant de l'acide sulfurique) commercialisé par la société Rhodia Engineering Plastics sous la dénomination Technyl® 27 A00.
- PA 6 : polyamide 6 de viscosité relative 2,7 (selon la norme ISO 307 en utilisant comme solvant de l'acide sulfurique) commercialisé par la société Rhodia Engineering Plastics sous la dénomination ASN 27 S.
- Elastomère : EPR-g-MA : Copolymère éthylène-propylène comprenant de l'anhydride maléique greffé, ayant une densité de 0,87 g/ml (mesuré selon ASTM D792) et une MFR de 23 (mesuré selon ASTM D1238, à 280 °C/2,16 kg).
- Noir de carbone conductible : commercialisé par la société AKZO sous la dénomination Ketjen Black 600®.
- Polyétheramide : copolymère bloc multisegmenté comprenant 50 % en poids de blocs polyamide 6 et 50 % en poids de blocs polyéthylène glycol, X correspondant à un atome d'oxygène ; dont la masse moléculaire moyenne de chaque bloc est d'environ 1500 g/mol. Point de fusion : 204°C selon la norme ASTM D3418.
- Wollastonite : silicate de calcium ayant granulométrie inférieure à 10 µm et un facteur de forme de 5, traitement en surface avec un agent de couplage.
- Mica : mica de type muscovite broyée, ayant une granulométrie moyenne, exprimée en D₅₀ inférieure ou égale à 40 µm, et une densité apparente de 450 g/l.
- Autres : correspond à un mélange de stabilisateur de couleur et de lubrifiants (stéarate de calcium).
- Mélange maître MB : Mélange à base d'EVA comprenant 30% de noir de carbone conductible Ketjen Black 300® ; vendu par la société Iridi Color Srl sous la dénomination MBUN NIRO N129.

### Exemple 1 : Préparation de compositions

Des compositions à base de polyamide sont fabriquées par mélange de différents composés mentionnés ci-dessous via une extrudeuse bi-vis. Les compositions, les composés utilisés et leurs quantités sont mentionnés dans le tableau 1 :

**Tableau 1**

| **Formulations** | **A** | **B** | **C** | **D** | **E** | **F** | **G** | **1** | **2** |
|---|---|---|---|---|---|---|---|---|---|
| PA 66 (%) | 54,5 | 56,5 | 58,5 | 59,8 | 60,5 | 55,5 | 50,5 | 58,5 | 57,5 |
| PA 6 (%) | 10 | 10 | 10 | 10 | 0 | 0 | 0 | 0 | 0 |
| Elastomère (%) | 12 | 12 | 12 | 12 | 12 | 12 | 12 | 12 | 12 |
| Mica (%) | 15 | 15 | 15 | 15 | 15 | 15 | 15 | 15 | 15 |
| Autres (%) | 2,5 | 2,5 | 2,5 | 2,5 | 2,5 | 2,5 | 2,5 | 2,5 | 2,5 |
| Polyétheramide (%) | 0 | 0 | 0 | 0 | 10 | 15 | 20 | 10 | 10 |
| Noir de carbone (%) | 6 | 4 | 2 | 1 | 0 | 0 | 0 | 2 | 3 |
| | | | | | | | | | |
| Adhésion de la peinture | + | + | - | - | - | - | - | + | + |
| Résistivité de surface (Ω) | n | 5.10⁵ | 7.10¹¹ | isolant | 25.10⁹ | 25.10⁹ | 25.10⁹ | 16.10⁹ | 5.10⁹ |
| MFI (g/10 min.) | 0 | 0,1 | 5,1 | 8,5 | 14 | 15 | 17 | 12 | 10 |
| Choc Charpy entaillé (KJ/m²) | 5,4 | 5,6 | 5,9 | 6,9 | 8,3 | 8,5 | 9 | 7,5 | 7 |
| Elongation à la rupture (%) | 5,7 | 7,7 | 12,1 | 11,1 | 18 | 21 | 23 | 12,5 | 11 |
| Module de tension (N/mm²) | 3540 | 3700 | 3530 | 3510 | 3210 | 3250 | 2910 | 3100 | 3210 |
| HDT (°C) | 200 | 201 | 206 | 208 | 205 | 202 | 192 | 205 | 205 |

Les pourcentages des différents composants sont exprimés en poids par rapport au poids total de la composition.

Les propriétés sont mesurées de la manière suivante :
- MFI (melt flow index) Indice de fluidité en fondue selon la norme ISO 1133 à 275°C avec une charge de 5 kg.
- Choc Charpy entaillé selon la norme ISO 179/1eA à 23°C.
- Elongation à la rupture selon la norme ISO 527 à 23°C.
- Module de tension selon la norme ISO 527 à 23°C.
- HDT (Température de déformation à la chaleur) selon la norme ISO 75Be avec une charge de 0,45 N/mm².
- Résistivité de surface selon la norme IEC 61340-4-1. La mesure est effectuée sur une plaque moulée par injection (200x150x3 mm) en plaçant les sondes d'un appareil pour mesurer la résistance de marque Metriso 2000 ESD à une distance de 1 cm l'une de l'autre. On applique un voltage de 100 volts et on mesure la résistivité de surface de la plaque. La mesure est effectuée dans une pièce à une température de 23°C environ et une humidité relative de 50%.
- Adhésion de la peinture par déposition électrostatique : une plaque est moulée par injection à partir des compositions ci-dessus. L'application de la peinture sur les plaques est réalisée par un procédé « online » de peinture par cataphorèse en sept étapes : Etape 1 : e-coat simulation (traitement en cataphorèse) à 185°C pendant 30 minutes. Etape 2 : refroidissement pendant 20 minutes. Etape 3 : application du « primer » BASF PMR82 par vaporisation électrostatique. Etape 4: chauffage à 160°C pendant 30 minutes. Etape 5 : refroidissement pendant 20 minutes. Etape 6 : application d'une peinture blanche par vaporisation électrostatique. Etape 7 : refroidissement pendant 20 minutes. On note une mauvaise adhésion de la peinture par déposition électrostatique (notée - dans le tableau ci dessus) si l'on observe un aspect de peau d'orange, un manque de peinture et/ou ne mauvaise adhérence de la peinture sur la plaque. Dans le cas contraire, on observe une bonne adhésion de la peinture (notée + dans le tableau ci dessus).

Dans le tableau ci-dessus, n signifie non-mesuré.

### Exemple 2 : Préparation de compositions

Des compositions à base de polyamide sont fabriquées par mélange de différents composés mentionnés ci-dessous via une extrudeuse bi-vis. Les compositions, les composés utilisés et leurs quantités sont mentionnés dans le tableau 2 :

**Tableau 2**

| **Formulations** | **3** | **4** |
|---|---|---|
| PA 66 (%) | 46,95 | 43,95 |
| Elastomère (%) | 7 | 7 |
| Wollastonite (%) | 26 | 26 |
| Autres (%) | 2,05 | 2,05 |
| Polyétheramide (%) | 11 | 10 |
| Mélange maître MB (%) | 7 | 11 |
| | | |
| Adhésion de la peinture | **+** | **+** |
| Résistivité de surface (Ω) | 45.10⁹ | 3.10⁹ |
| MFI (g/10 min.) | 23,5 | 18,7 |
| Choc Charpy entaillé (KJ/m²) | 9,2 | 8 |
| Elongation à la rupture (%) | 12,8 | 10,8 |
| Module de tension (N/mm²) | 2730 | 2570 |
| HDT (°C) | 206 | 206 |

Les pourcentages des différents composants sont exprimés en poids par rapport au poids total de la composition.

## Revendications

1. Procédé d'application de peinture par déposition électrostatique sur un article mis en forme à partir d'une composition comprenant une matrice polyamide, **caractérisée en ce qu'**elle comprend :
- au moins 2 % en poids de charges électriquement conductrices ; et
- au moins 1 % en poids d'agents antistatiques de type polyétheramide représenté par la formule (I) : 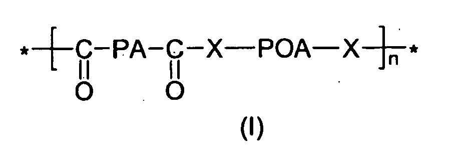 dans laquelle,
- n est un nombre entier compris entre 5 et 50 ;
- X représente un atome d'oxygène ou un groupement NH ;
- POA représente un bloc polyoxyde d'alkylène ;
- PA représente un bloc polyamide dont le motif de répétition est représenté par l'une des formules (IIa) ou (IIb): 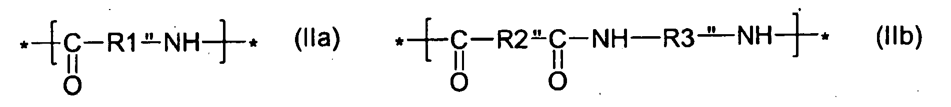 dans lesquelles : R¹, R², R³ sont des radicaux aromatiques ou aliphatiques comprenant 4 à 36 atomes de carbone ;
les pourcentages en poids étant exprimés par rapport au poids total de la composition.

2. Procédé selon la revendication 1, **caractérisé en ce que** la composition présente une résistivité de surface comprise entre 10⁵ Ω et 10¹¹ Ω, mesurée selon la norme IEC 61340-4-1.

3. Procédé selon l'une quelconque des revendications 1 à 2, **caractérisée en ce que** la composition présente un temps de déchargement supérieur ou égal à 10 secondes, mesuré selon la norme IEC 61340-5-1.

4. Procédé selon l'une quelconque des revendications 1 à 3, **caractérisé en ce que** la composition comprend de 2 à 50% en poids de charges électriquement conductrices par rapport au poids total de la composition.

5. Procédé selon l'une quelconque des revendications 1 à 4, **caractérisé en ce que** les charges électriquement conductrices sont choisies dans le groupe comprenant : un noir de carbone, un métal, un graphite, un polymère conducteur, un verre et/ou une charge minérale enrobée par une couche de métal, et/ou leur mélange.

6. Procédé selon l'une quelconque des revendications 1 à 5, **caractérisé en ce que** la composition comprend de 2 à 10 % en poids de noir de carbone en tant que charges électriquement conductrices, par rapport au poids total de la composition.

7. Procédé selon l'une quelconque des revendications 1 à 6, **caractérisé en ce que** la composition comprend de 1 à 30% en poids d'agents antistatiques par rapport au poids total de la composition.

8. Procédé selon l'une quelconque des revendications 1 à 7, **caractérisé en ce que** le radical R¹ est un radical linéaire divalent pentyle.

9. Procédé selon l'une quelconque des revendications 1 à 8, **caractérisé en ce que** le bloc POA est un bloc polyoxyde d'éthylène.

10. Procédé selon l'une quelconque des revendications 1 à 9, **caractérisé en ce que** la matrice polyamide est composée d'au moins un (co)polyamide choisi dans le groupe comprenant : le (co)polyamide 6 ; 4 ; 11 ; 12, 4.6 ; 6.6 ; 6.9 ; 6.10 ; 6.12 ; 6.18 ; 6.36. ; 6(T) ; 9(T) ; 6(I) ; MXD6 ; leurs copolymères et/ou mélanges.

11. Procédé selon l'une quelconque des revendications 1 à 10, **caractérisé en ce que** la composition comprend au moins un modificateur de résistance aux chocs choisi dans le groupe comprenant : l'éthylène propylène (EP) éventuellement greffé avec de l'anhydride maléique, le terpolymère éthylène propylène diène (EPDM) éventuellement greffé avec de l'anhydride maléique, les copolymère élastomère tel que styrène maléique anhydride (SMA), le polyéthylène à ultra basse densité (ULDPE), le polyéthylène linéaire à basse densité (LLDPE), les styrènes butadiènes (SBS et SBR), les styrènes éthylène butadiène styrène (SEBS), le polypropylène (PP), les élastomères acryliques (tel que les élastomères polyacryliques), les copolymère et terpolymères de l'éthylène avec des dérivés acryliques ou méthacryliques et/ou avec l'acétate de vinyle, les ionomères, le terpolymère acrylonitrile-butadiène-styrène (ABS) et le terpolymère acrylique-styrène-acrylonitrile (ASA).

12. Procédé selon l'une quelconque des revendications 1 à 11, **caractérisé en ce que** l'article est obtenu par mise en forme de la composition par un procédé choisi dans le groupe comprenant un procédé d'extrusion, de moulage, et d'injection.

## Claims

1. Process for the application of paint by electrostatic deposition onto an article formed from a composition comprising a polyamide matrix, **characterized in that** the composition comprises:
- at least 2% by weight of electrically conductive fillers; and
at least 1% by weight of antistatic agents of polyetheramide type represented by the formula (I): 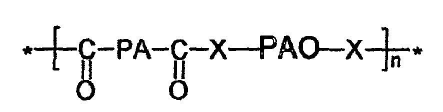 in which:
- n is an integer between 5 and 50;
- X represents an oxygen atom or an NH group;
- PAO represents a poly(alkylene oxide) block;
- PA represents a polyamide block, the repeat unit of which is represented by either of the formulae (IIa) or (IIb): 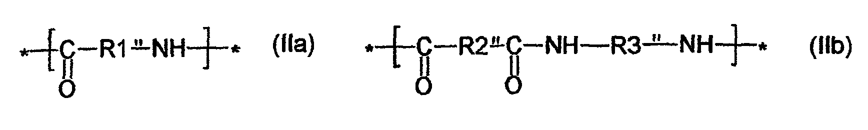 in which: R¹, R² and R³ are aromatic or aliphatic radicals comprising 4 to 36 carbon atoms;
the percentages by weight being expressed with respect to the total weight of the composition.

2. Process according to Claim 1, **characterized in that** the composition exhibits a surface resistivity of between 10⁵ Ω and 10¹¹ Ω, measured according to Standard IEC 61340-4-1.

3. Process according to either one of Claims 1 and 2, **characterized in that** the composition exhibits a discharge time of greater than or equal to 10 seconds, measured according to Standard IEC 61340-5-1.

4. Process according to any one of Claims 1 to 3, **characterized in that** the composition comprises from 2 to 50% by weight of electrically conductive fillers, with respect to the total weight of the composition.

5. Process according to any one of Claims 1 to 4, **characterized in that** the electrically conductive fillers are chosen from the group consisting of: a carbon black, a metal, a graphite, a conductive polymer, a glass and/or an inorganic filler coated with a metal layer, and/or their mixture.

6. Process according to any one of Claims 1 to 5, **characterized in that** the composition comprises from 2 to 10% by weight of carbon black as electrically conductive fillers, with respect to the total weight of the composition.

7. Process according to any one of Claims 1 to 6, **characterized in that** the composition comprises from 1 to 30% by weight of antistatic agents, with respect to the total weight of the composition.

8. Process according to any one of Claims 1 to 7, **characterized in that** the radical R¹ is a linear divalent pentyl radical.

9. Process according to any one of Claims 1 to 8, **characterized in that** the PAO block is a poly(ethylene oxide) block.

10. Process according to any one of Claims 1 to 9, **characterized in that** the polyamide matrix is composed of at least one (co)polyamide chosen from the group consisting of: (co)polyamide 6; 4; 11; 12; 4,6; 6,6; 6,9; 6,10; 6,12; 6,18; 6,36; 6(T); 9(T); 6(1); MXD6; their copolymers and/or blends.

11. Process according to any one of Claims 1 to 10, **characterized in that** the composition comprises at least one modifier of the impact strength chosen from the group consisting of: ethylene-propylene (EP) optionally grafted with maleic anhydride, ethylene-propylene-diene (EPDM) terpolymer optionally grafted with maleic anhydride, elastomeric copolymers, such as styrene-maleic anhydride (SMA), ultra-low-density polyethylene (ULDPE), linear low density polyethylene (LLDPE), styrene-butadiene (SBS and SBR) compounds, styrene-ethylene-butadiene-styrene (SEBS) compounds, polypropylene (PP), acrylic elastomers (such as polyacrylate elastomers), copolymers and terpolymers of ethylene with acrylic or methacrylic derivatives and/or with vinyl acetate, ionomers, acrylonitrile-butadiene-styrene (ABS) terpolymer and acrylic-styrene-acrylonitrile (ASA) terpolymer.

12. Process according to any one of Claims 1 to 11, **characterized in that** the article is obtained by forming the composition by a process chosen from the group consisting of an extrusion process, a molding process and an injection process.

## Patentansprüche

1. Verfahren zum Aufbringen von Lack durch elektrostatische Abscheidung auf einen Gegenstand, der aus einer Zusammensetzung mit einer Polyamidmatrix geformt ist, **dadurch gekennzeichnet, daß** die Zusammensetzung:
- mindestens 2 Gew.-% elektrisch leitfähige Füllstoffe und
- mindestens 1 Gew.-% Antistatika vom Polyetheramid-Typ der Formel (I): 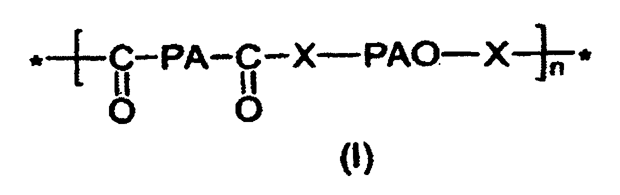 worin
- n für eine ganze Zahl zwischen 5 und 50 steht;
- X für ein Sauerstoffatom oder eine NH-Gruppe steht;
- PAO für einen Polyalkylenoxidblock steht;
- PA für einen Polyamidblock steht, dessen Wiederholungseinheit durch eine der Formeln (IIa) oder (IIb) wiedergegeben wird: 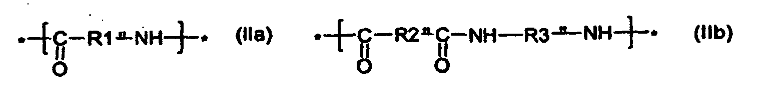
worin R¹, R² und R³ für aromatische oder aliphatische Reste mit 4 bis 36 Kohlenstoffatomen stehen;
enthält, wobei die Gewichtsprozentanteile sich auf das Gesamtgewicht der Zusammensetzung beziehen.

2. Verfahren nach Anspruch 1, **dadurch gekennzeichnet, daß** die Zusammensetzung einen spezifischen Oberflächenwiderstand zwischen 10⁵ Ω und 10¹¹ Ω, gemessen gemäß der IEC-Norm 61340-4-1, aufweist.

3. Verfahren nach einem der Ansprüche 1 bis 2, **dadurch gekennzeichnet, daß** die Zusammensetzung eine Entladezeit größer gleich 10 Sekunden, gemessen gemäß der IEC-Norm 61340-5-1, aufweist.

4. Verfahren nach einem der Ansprüche 1 bis 3, **dadurch gekennzeichnet, daß** die Zusammensetzung 2 bis 50 Gew.-% elektrisch leitfähige Füllstoffe, bezogen auf das Gesamtgewicht der Zusammensetzung, enthält.

5. Verfahren nach einem der Ansprüche 1 bis 4, **dadurch gekennzeichnet, daß** die elektrisch leitfähigen Füllstoffe aus der Gruppe enthaltend Ruß, Metall, Graphit, leitfähiges Polymer, Glas und/oder von einer Metallschicht umhüllten anorganischen Füllstoff und/oder Mischungen davon ausgewählt sind.

6. Verfahren nach einem der Ansprüche 1 bis 5, **dadurch gekennzeichnet, daß** die Zusammensetzung 2 bis 10 Gew.-% Ruß als elektrisch leitfähige Füllstoffe, bezogen auf das Gesamtgewicht der Zusammensetzung, enthält.

7. Verfahren nach einem der Ansprüche 1 bis 6, **dadurch gekennzeichnet, daß** die Zusammensetzung 1 bis 30 Gew.-% Antistatika, bezogen auf das Gesamtgewicht der Zusammensetzung, enthält.

8. Verfahren nach einem der Ansprüche 1 bis 7, **dadurch gekennzeichnet, daß** der Rest R¹ für einen zweiwertigen linearen Pentylrest steht.

9. Verfahren nach einem der Ansprüche 1 bis 8, **dadurch gekennzeichnet, daß** es sich bei dem PAO-Block um einen Polyethylenoxidblock handelt.

10. Verfahren nach einem der Ansprüche 1 bis 9, **dadurch gekennzeichnet, daß** die Polyamidmatrix aus mindestens einem (Co)polyamid aus der Gruppe enthaltend (Co)polyamid 6; 4; 11; 12; 4,6; 6,6; 6,9; 6,10; 6,12; 6,18; 6,36; 6(T); 9(T); 6(1); MXD6; Copolymere und/oder Mischungen davon besteht.

11. Verfahren nach einem der Ansprüche 1 bis 10, **dadurch gekennzeichnet, daß** die Zusammensetzung mindestens einen Schlagzähigkeitsmodifikator aus der Gruppe enthaltend Ethylen-Propylen (EP), gegebenenfalls mit Maleinsäureanhydrid gepfropft, Ethylen-Propylen-Dien-Terpolymer (EPDM), gegebenenfalls mit Maleinsäureanhydrid gepfropft, elastomere Copolymere, wie Styrol-Maleinsäureanhydrid (SMA), Polyethylen ultraniedriger Dichte (ULDPE), lineares Polyethylen niedriger Dichte (LLDPE), Styrol-Butadiene (SBS und SBR), Styrol-Ethylen-Butadien-Styrole (SEBS), Polypropylen (PP), Acrylelastomere (wie Polyacrylatelastomere), Copolymere und Terpolymere von Ethylen mit Acryl- oder Methacrylderivaten und/oder mit Vinylacetat, Ionomere, AcrylnitrilButadien-Styrol-Terpolymer (ABS) und Acryl-Styrol-Acrylnitril-Terpolymer (ASA) enthält.

12. Verfahren nach einem der Ansprüche 1 bis 11, **dadurch gekennzeichnet, daß** der Gegenstand durch Formen der Zusammensetzung durch ein Verfahren aus der Gruppe enthaltend ein Extrusionsverfahren, ein Abformverfahren und ein Spritzverfahren geformt wird.
